# EUROPEAN PATENT SPECIFICATION

(11) **EP 2 041 552 B1**
(45) Date of publication and mention of the grant of the patent: **14.11.2018**
(21) Application number: 07788768.5
(22) Date of filing: 27.06.2007
(51) Int. Cl.: G01B 11/00, G01N 21/898, G01B 11/10, G01N 21/25, B07C 5/14, G01B 11/04

(54) **METHOD FOR MEASURING THE VOLUME OR THE END FACE DIAMETER OF A TREE TRUNK AND FOR QUALITY CONTROL**
VERFAHREN ZUR MESSUNG DES VOLUMENS ODER DES ENDFLÄCHENDURCHMESSERS EINES BAUMSTAMMS SOWIE ZUR QUALITÄTSKONTROLLE
PROCÉDÉ DE MESURE DU VOLUME OU DU DIAMÈTRE DE LA FACE D'EXTRÉMITÉ D'UN TRONC D'ARBRE ET DE CONTRÔLE DE LA QUALITÉ

(30) Priority: 30.06.2006 FI 20065461; 09.11.2006 FI 20065705
(43) Date of publication of application: 01.04.2009
(73) Proprietor: Teknosavo Oy, 57100 Savonlinna (FI)
(72) Inventor: HÄMÄLÄINEN, Hannu, 57710 Savonlinna (FI)
(74) Representative: LEITZINGER OY
(86) International application number: PCT/FI2007/050393
(87) International publication number: WO 2008/000910

(56) References cited:
- WO-A-00/54034
- WO-A-00/79213
- WO-A-2005/080949
- WO-A1-00/79213
- WO-A1-90/11488
- WO-A1-2005/080949
- WO-A1-2006/042411
- US-A- 4 764 017
- US-A- 5 544 757
- US-A- 6 122 065
- US-A- 6 122 065
- US-A1- 2006 056 659
- K.D.KLAPSTEIN ET AL: "Optical characteristics of wood stains and rot" APPLIED OPTICS, vol. 28, no. 20, 15 October 1989 (1989-10-15), pages 4450-4452, XP008101513 USA
- KLAPSTEIN K.D.: 'Optical characteristics of wood stains and rots' APPLIED OPTICS vol. 28, no. 20, 1989, pages 4450 - 4452, XP008101513

## Description

The invention relates to a method for measuring the end face diameter of a tree trunk and for quality control as disclosed in the appended claims.

In the method, a tree trunk is advanced across a volume measuring apparatus and the top end and butt end diameters are measured with three laser gauges and the tree volume is worked out from the obtained dimensional data. The measurement of an end face diameter can also be performed without traditional laser gauges by using the same colour matrix camera as the one used for quality control.

WO 2005/080949 shows a system for grading of industrial wood by taking pairs of images of the opposite end faces and of the exposed upper sides of lying logs. A plurality of logs can be imaged using a single camera or a pair of cameras for stereo imaging of each log seen from both ends. Image analysis methods can be used for recognizing dimensions, percentages of bark and wood and quality of the logs.

US 6,122,065 shows an apparatus and method for detecting surface defects on an article freely standing on a conveyor. The apparatus and method is useful for detecting roughness, cavities, wane, missing wood and altered wood on lumber pieces which are conveyed at high speed. Dimensions of the articles are not measured.

K.D. Klapstein et al: "Optical characteristics of wood stains and rot"; Applied Optics, Vol. 28, No 20, pages 4450-4452 (15.10.1989) shows laboratory reflection measurements to distinguish between sound and unsound wood. It appears from the reflection curves that rot absorbs blue light considerably more than red light.

WO 00/79213 shows a method for sorting saw timber by measuring the dimension, profile and other properties of individual logs in order to maximize the sawyield.

The method combines two measuring systems, namely an image analysis system, which in an image of a log end surface detects image points on the wood surface profile under the bark, and a further measuring system for measuring in points on a log end, either on top of the bark (shadow measurement) or on the wood surface (x-ray measurement).

An important aspect in both mechanical and chemical wood processing industry is the use of sufficiently high quality pulp wood. Poor quality pulp wood does not yield a sufficiently good and high-grade end product. The quality of pulp wood is controlled by manually conducted monitoring of tree trunks, but the work requires continuous sharp attention and is not motivating.

The problem to be solved by the present invention is improving the wood quality control, particularly detecting the proportion of rot, with simultaneous measuring the volume or the end face diameter in wood processing industry.

The object of the invention is achieved with a method which is characterized by what is presented in claim 1. The dependent claims disclose preferred embodiments of the invention. A method of the invention is preferably integrated with a pretreatment process of pulpwood prior to debarking.

The method presented in the invention is based on the fact that the brown rot in the end face of a tree trunk absorbs blue light considerably more than red light. The end face of a tree trunk is illuminated with light that contains wavelengths as mentioned above and camera signals are used, for example on the basis of red light present in the signals of a colour matrix camera, for measuring the end face area of the tree trunk and the blue/red ratio enables finding out the area of rot in the end face of a tree trunk, and these areas are used for further calculating the proportional amount of rot in the tree trunk.

The invented method lends itself to pulp wood quality control in wood processing industry. Once received, a tree trunk is guided to proceed onto a measuring range in the apparatus and into an imaging beam, the apparatus imaging the tree trunk from both end directions of the tree trunk and sorting out a barked portion from the tree trunk and rotten and sound wood portions from the butt and top end faces of the tree trunk. At the same time, the tree trunk can be measured for its end face diameters or its volume with a prior known laser measuring method. The apparatus uses the above values to work out a ratio representing the proportional amount of rot in a tree trunk as well as indicating whether a tree trunk is oversized or undersized.

The invented method makes use of the brown (browner than wood surface) colour of rot. The method takes advantage of the fact that brown colour is effective in absorbing blue light (short wavelength from visible light), while absorbing just a little red light (longer wavelength from visible light). By illuminating a tree trunk with light that contains both blue and red light (for example a normal filament lamp or a xenon lamp) and by examining the image for a separation pattern of both blue and red light, a highly effective means is provided for analyzing the amount of rotten and sound wood surface at the end face of a tree trunk. The imaging technique can be practiced in quite a simple manner by means of a camera capable of normal RGB colour separation technique, which in its simplest form can be a colour matrix camera.

The most important benefit of the invented method is the discussed enhanced distinction of surfaces upon the examination of images taken in different colours and separation between the images.

The invention will now be described more specifically with reference to the accompanying drawings, in which
- Fig. 1: shows an apparatus implementing the invented method in the process of imaging a moving tree trunk. In this case, the tree trunk travels on a flight conveyor in a lateral direction (in a direction normal to its longitudinal axis),
- Fig. 2: shows a tree trunk in a view from the imaging direction on a flight conveyor 2, and
- Fig. 3: is a block diagram, showing a second embodiment for an apparatus implementing the invented method, the apparatus being in the process of imaging a moving tree trunk. The tree trunk travels on a flight conveyor in a direction normal to its longitudinal axis.

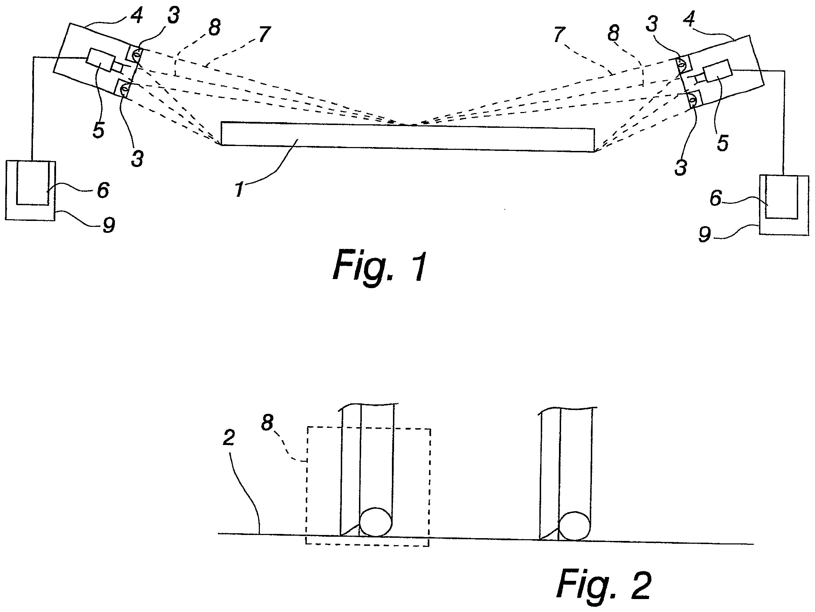

In reference to figs. 1 and 2, the operation of an invented method and an apparatus for practicing the same shall now be described. A tree trunk 1 to be imaged travels on a flight conveyor 2 in a transverse direction relative to the imaging matrix of matrix cameras 5. An imaging field 8 (matrix) of the matrix cameras is lit up by illuminators 3. One light source 3 emits red and the other blue light 7 for further enhanced imaging (i.e. there is no disturbing intermediate range spectrum). The surface of wood and rot is a diffuse surface, thus presenting itself always at an equal brightness to the camera, regardless of the angle. The lamps 3, disposed in a camera and light enclosure 4, are positioned closer to a tree trunk than the camera, such that the triggering of imaging actions is enhanced as a result of the shadow (i.e. colour variations of the conveying flights and the supporting base do not affect the analysis). Now, when the signal of red light reaches a certain level in the output of a camera 5, it is a wooden surface of the tree trunk 1 which is being measured and, on the other hand, if at the same time the signal of blue light falls below a certain value, it is rot or bark which is being visualized. From the relationships between these signals in the matrix is obtained a number, for example a percentage number, representing the amount of rot, by using of a data processor 6 present in a measuring instrument enclosure 9. Bark is present on the outer surface of a tree trunk and makes up a circle in a matrix, the diameter of which can be worked out from pixels in the matrix. The external dimension of a tree trunk end face is calculated from the matrix along the outer surface of the bark circle. In the event that the end of a tree trunk is partly or completely barkless, the diameter of the tree trunk end is also calculated from the matrix of a camera image along the outer surface of a calculated bark circle. This is possible by virtue of a colour separation according to the invention, which enables a separate identification of wood and a bark circle.

As depicted in figs. 1 and 2, the image field 8 visible to the camera 5 covers not only the end face of a tree trunk but also a considerable length of its stem. This is necessary because the lengths and end positions of tree trunks are variable. The length of a visible tree trunk stem is at least 0,5 m, preferably more than 0,8 m.

As illustrated in fig. 1, the end face and the stem of a tree trunk are illuminated by light beams 7 at an acute angle relative to the longitudinal axis of the tree trunk and the illuminated end face and stem of the tree trunk are imaged from the same direction over the image field 8.

The end face diameter measurement and the quality identification of a tree trunk are performed on both end faces of the tree trunk while advancing it in a direction normal to its lengthwise direction on the flight conveyor 2, which is used for feeding the pulpwood 1 to a pretreatment process in wood industry. As such, a method of the invention is integrated with a pulpwood pretreatment process upstream of debarking.

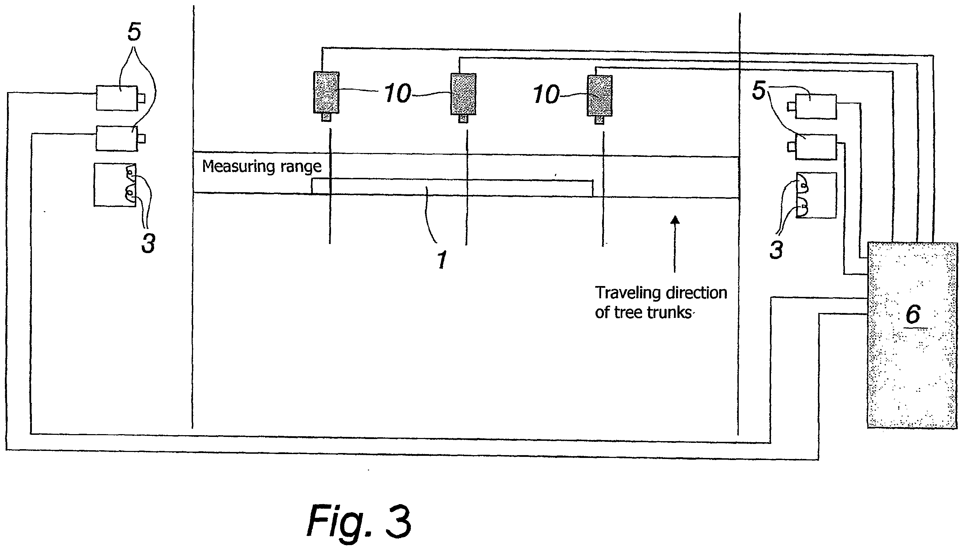

In reference to fig. 3, the operation of an invented method and an apparatus for practicing the same shall now be described according to a second embodiment. The volume measurement is performed in a prior known manner by advancing a tree trunk on a flight conveyor (not shown) across a volume measuring apparatus and by using three laser gauges 10 to measure a top end and butt end diameter, as well as a length. Laser measurement is based on allowing a laser beam to scan over a certain distance, e.g. 3 m, in the lengthwise sense of a tree trunk and examining a retroreflected beam to find out which scanning range includes wood. Three laser gauges 10 enable covering e.g. a 9 m wide conveyor. Scanning cycles are repeated at a sufficient frequency to provide sufficient differentiation also in terms of diameter measurement. Other aspects that are found out include the shape of a tree trunk, its straightness or crookedness. The obtained dimensional data is used for calculating the tree trunk volume. A tree trunk 1 subjected to imaging travels on the flight conveyor also in a direction transverse to the imaging matrix of matrix cameras 5 and the image field of said matrix cameras is lit up by illuminators 3. Quality monitoring and verifying the amount of rot are performed as described above in reference to the exemplary embodiment of fig. 1. However, another aspect making fig. 3 different from fig. 1 is that each end face of the tree trunk is imaged with two cameras 5, each with its specific measuring range, i.e. the cameras are imaging end faces which are unequal distances away. This arrangement is necessary because the end faces of tree trunks are not at an equal distance from the camera and a sufficiently sharp picture is required of every tree trunk end face for successful quality grading.

The end face and the stem of a tree trunk can be illuminated by light beams presented at an acute angle relative to the longitudinal axis of the tree trunk, the illuminated end face of the tree trunk being also imaged from the same direction. The quality identification of a tree trunk end face is performed on both end faces of a tree trunk while advancing the tree trunk in a direction normal to its longitudinal direction on a flight conveyor used for feeding the pulpwood 1 to a pretreatment process in wood industry prior to debarking.

## Claims

1. A method for measuring the end face diameter of a tree trunk and for quality control, said method comprising advancing the tree trunk in a direction normal to its longitudinal direction past a measuring apparatus, measuring the volume of the tree trunk by optical means and determining the diameter and/or the area of a three trunk end face by imaging of bark present on the outer surface of the tree trunk, **characterized in that** the end face of the tree trunk is illuminated with a light source (3) containing wavelengths of red and blue light, the light coming from the tree trunk end face is received by a camera capable of colour separation, such as a colour matrix camera (5), and by examining the separation pattern of both blue and red light, the proportion of rot or other defect of wood present in the tree trunk end face is identified from the red/blue ratio in the signals of the camera (5), wherein the colour separation enables a separate identification of wood and a bark circle.

2. A method as set forth in claim 1, **characterized in that** the end face of a tree trunk is illuminated with a first light source (3), having the highest intensity of its light within the red wavelength range, and with a second light source (3), having the highest intensity of its light within the blue wavelength range.

3. A method as set forth in claim 1 or 2, **characterized in that** each end face of a tree trunk is imaged with two cameras (5), each having its specific measuring range, i.e. end faces at various distances are imaged thereby.

4. A method as set forth in any of claims 1-3, **characterized in that** the method is integrated with a pulpwood pretreatment process upstream of debarking.

5. A method as set forth in claims 1 and 4, **characterized in that** the diameters of the end faces in tree trunks are calculated from the matrix of a camera image along the outer surface of a bark circle.

6. A method as set forth in any of claims 1-5, **characterized in that** the diameters of the end faces in tree trunks are calculated from the matrix of a camera image along the outer surface of a calculated bark circle also in the case that the end of a tree trunk is partly or completely barkless.

## Patentansprüche

1. Verfahren zum Messen des Endflächendurchmessers eines Baumstammes und zur Qualitätskontrolle, wobei das Verfahren das Vorwärtsbewegen des Baumstammes in einer Richtung senkrecht zu seiner Längsrichtung an einer Messvorrichtung vorbei, das Messen des Volumens des Baumstamms durch optische Mittel und das Bestimmen des Durchmessers und/oder der Fläche der Baumstammendfläche durch das Abbilden der Rinde, die auf der Außenfläche des Baumstammes vorhanden ist, umfasst, **dadurch gekennzeichnet, dass** die Endfläche des Baumstammes mit einer Lichtquelle (3) mit Wellenlängen von rotem und blauem Licht beleuchtet wird, wobei das von der Baumstammendfläche kommende Licht von einer zur Farbtrennung fähigen Kamera, beispielsweise einer Farbmatrix-Kamera (5), empfangen wird, und durch Untersuchen des Trennmusters von sowohl blauem als auch rotem Licht der Anteil an Fäulnis oder anderen Fehlern des Holzes, die in der Baumstammendfläche vorhanden sind, aus dem Rot-/Blau-Verhältnis in den Signalen der Kamera (5) identifiziert wird, wobei die Farbtrennung eine separate Identifizierung von Holz und eines Rindenkreises ermöglicht.

2. Verfahren nach Anspruch 1, **dadurch gekennzeichnet, dass** die Endfläche eines Baumstammes mit einer ersten Lichtquelle (3) beleuchtet wird, die die höchste Intensität ihres Lichts innerhalb des roten Wellenlängenbereichs aufweist, und mit einer zweiten Lichtquelle (3), die die höchste Intensität ihres Lichts innerhalb des blauen Wellenlängenbereichs aufweist.

3. Verfahren nach Anspruch 1 oder 2, **dadurch gekennzeichnet, dass** jede Endfläche eines Baumstammes mit zwei Kameras (5) abgebildet wird, wobei jede ihren spezifischen Messbereich aufweist, d.h. Endflächen in verschiedenen Abständen werden dadurch abgebildet.

4. Verfahren nach einem der Ansprüche 1-3, **dadurch gekennzeichnet, dass** das Verfahren in ein Faserholz-Vorbehandlungsverfahren vor der Entrindung integriert wird.

5. Verfahren nach den Ansprüchen 1 und 4, **dadurch gekennzeichnet, dass** die Durchmesser der Endflächen in Baumstämmen aus der Matrix eines Kamerabildes entlang der Außenfläche eines Rindenkreises berechnet werden.

6. Verfahren nach einem der Ansprüche 1-5, **dadurch gekennzeichnet, dass** die Durchmesser der Endflächen in Baumstämmen aus der Matrix eines Kamerabildes entlang der Außenfläche eines berechneten Rindenkreises auch in dem Fall, dass das Ende eines Baumstammes teilweise oder vollständig ohne Rinde ist, berechnet werden.

## Revendications

1. Procédé pour la mesure du diamètre de la face d'extrémité d'un tronc d'arbre et pour le contrôle qualité, ledit procédé comprenant l'avancement du tronc d'arbre dans une direction perpendiculairement à sa direction longitudinale devant un dispositif de mesure, la mesure du volume du tronc d'arbre par un moyen optique et la détermination du diamètre et/ou de l'aire d'une face d'extrémité de tronc d'arbre par imagerie d'écorce présente sur la surface extérieure du tronc d'arbre, **caractérisé en ce que** la face d'extrémité du tronc d'arbre est éclairée par une source de lumière (3) contenant des longueurs d'onde de lumière rouge et bleue, la lumière venant de la face d'extrémité du tronc d'arbre est reçue par une caméra capable de séparer les couleurs, telle qu'une caméra matricielle couleur (5), et la proportion de pourriture ou d'un autre défaut du bois présent dans la face d'extrémité de tronc d'arbre est identifiée à partir du rapport rouge/bleu dans les signaux de la caméra (5), en examinant le modèle de séparation de la lumière bleue et rouge, la séparation de couleurs permettant une identification séparée du bois et d'un cercle d'écorce.

2. Procédé selon la revendication 1, **caractérisé en ce que** la face d'extrémité du tronc d'arbre est éclairée par une première source de lumière (3) présentant l'intensité la plus forte de sa lumière dans la plage de longueur d'onde rouge, et par une deuxième source de lumière (3) présentant l'intensité la plus forte de sa lumière dans la plage de longueur d'onde bleue.

3. Procédé selon la revendication 1 ou 2, **caractérisé en ce que** chaque face d'extrémité d'un tronc d'arbre est imagée par deux caméras (5) ayant chacune sa plage de mesure spécifique, c'est-à-dire que des faces d'extrémité à diverses distances sont ainsi imagées.

4. Procédé selon l'une quelconque des revendications 1 à 3, **caractérisé en ce que** le procédé est intégré dans un processus de prétraitement de bois à pâte en amont de l'écorçage.

5. Procédé selon les revendications 1 et 4, **caractérisé en ce que** les diamètres des faces d'extrémité dans les troncs d'arbre sont calculés à partir de la matrice d'une image de caméra le long de la surface extérieure d'un cercle d'écorce.

6. Procédé selon l'une quelconque des revendications 1 à 5, **caractérisé en ce que** les diamètres des faces d'extrémité dans les troncs d'arbre sont calculés à partir de la matrice d'une image de caméra le long de la surface extérieure d'un cercle d'écorce calculé également dans le cas où l'extrémité d'un tronc d'arbre est partiellement ou complètement dépourvue d'écorce.
